# EUROPEAN PATENT APPLICATION

(11) **EP 2 613 431 A1**
(43) Date of publication of application: **10.07.2013**
(21) Application number: 11821949.2
(22) Date of filing: 02.09.2011
(51) Int. Cl.: H02M 3/28, H02J 1/00, H02M 7/06

(54) **SWITCHING POWER SUPPLY CIRCUIT PROVIDED WITH PROTECTION FUNCTION**

(30) Priority: 02.09.2010 JP 2010197124
(71) Applicant: I-O Data Device, Inc., Kanazawa-shi Ishikawa 920-8512 (JP)
(72) Inventor: SAKA Takashi, Kanazawa-shi Ishikawa 920-8512 (JP); AKIYAMA Shigeta, Kanazawa-shi Ishikawa 920-8512 (JP); MATSUDA Kazuhiro, Kanazawa-shi Ishikawa 920-8512 (JP); OTSUKA Katsuichiro, Kanazawa-shi Ishikawa 920-8512 (JP)
(74) Representative: Noronha, Catherine
(86) International application number: PCT/JP2011/069982
(87) International publication number: WO 2012/029935

(57) **Abstract**

The present invention includes: a transformer having a primary winding, a secondary winding and a tertiary winding; a primary-side rectifying and smoothing circuit, which converts alternating-current power to direct-current power and smoothes the power; a secondary-side rectifying and smoothing circuit, which smoothes secondary-side power; a tertiary-side rectifying and smoothing circuit, which smoothes power of the tertiary winding; a switching circuit, which opens and closes the primary winding; a pulse width control circuit, which controls the pulse width of drive signals that control the opening and closing of the switching circuit; and a secondary-side electrolytic capacitor deterioration detecting circuit, which detects deterioration of the secondary-side electrolytic capacitor. The secondary-side electrolytic capacitor deterioration detecting circuit detects deterioration of the secondary-side electrolytic capacitor by inputting the output voltage of the tertiary-side rectifying and smoothing circuit, and stops operation of a switching power supply circuit.

## Description

### Technical Field

The present invention relates to a technique for detecting a deterioration of an electrolytic capacitor for a rectifying and smoothing circuit in a switching power supply device and preventing a disruptive accident thereof in advance.

### Background of the Invention

Within a switching power supply device, an electrolytic capacitor used for a rectifying and smoothing circuit deteriorates due to repeated charging and discharging of high-current or aging. Therefore if the part continues to be used beyond its life, the deterioration may cause a disruption of the switching power supply, sometimes resulted in a smoke or a fire accident.
In this regard, several attempts have been made on the switching power supply circuit from a circuit perspective, for detecting a deterioration of an electrolytic capacitor and reacting thereto.
For example, a technique is disclosed in a patent document 1 such that an increase of Equivalent Series Resistance (ESR) caused by a deterioration of an electrolytic capacitor is detected based on the voltage difference of both terminals of a secondary winding of a transformer then a feedback of the detection is made to a primary side of a circuit via a photo coupler.

### Prior Art Documents

### Patent Documents

Patent document 1: Japanese Laid-Open Patent Application No. JP2000-032747

### Summary of the Invention

### Description of the Related Art

However, past solutions were not necessarily enough, leaving some problems, for detecting a disruption of a switching power supply device caused by a deterioration of an electrolytic capacitor.
Besides, a technique disclosed in the document above needs a circuit modification such as an addition of a ripple-voltage detecting circuit, made with a transistor, and a photo coupler, whereby causing problems of increasing cost and requiring relatively large circuit space for the modification.

The present invention aims to provide a low cost switching power supply device, just by adding a simple circuit, for detecting a deterioration of an electrolytic capacitor of a rectifying and smoothing circuit and avoiding disruptive accidents thereby in advance.

In order to solve the problems and achieve the objective of the present invention, each switching power supply circuit for three inventions is configured as follows, respectively.
A switching power supply circuit for a first invention comprises: a transformer having a primary winding, a secondary winding and a tertiary winding; a primary-side rectifying circuit, which converts an alternating-current power to a direct-current power; a primary-side electrolytic capacitor, which smoothes the direct-current power outputted from the primary-side rectifying circuit; a secondary-side rectifying circuit, which converts an alternating-current power, outputted by the secondary winding of the transformer, to a direct-current power; a secondary-side electrolytic capacitor, which smoothes the direct-current power outputted from the secondary-side rectifying circuit; a tertiary-side rectifying and smoothing circuit, which converts an alternating-current power, outputted from the tertiary winding of the transformer, to a direct-current power then smoothes the rectified power; a switching circuit, which opens and closes the primary winding of the transformer that inputs the voltage of the primary-side electrolytic capacitor; a pulse width control circuit, which controls the pulse width of drive signals that control the opening and closing of the switching circuit; a secondary-side electrolytic capacitor deterioration detecting circuit, which detects a deterioration of the secondary-side electrolytic capacitor; and a stop-signal generation circuit that inputs a signal for deterioration detection from the secondary-side electrolytic capacitor deterioration detecting circuit. The secondary-side electrolytic capacitor deterioration detecting circuit inputs the output voltage of the tertiary-side rectifying and smoothing circuit, detects a deterioration of the secondary-side electrolytic capacitor and outputs a deterioration detection signal to the stop-signal generation circuit, which thereby generates a stop signal that stops drive signals provided from the pulse width control circuit to the switching circuit then stops operation of a switching power supply circuit.

A switching power supply circuit for a second invention comprises: a transformer having a primary winding, a secondary winding and a tertiary winding; a primary-side rectifying circuit, which converts an alternating-current power to a direct-current power; a primary-side electrolytic capacitor, which smoothes the direct-current power outputted from the primary-side rectifying circuit; a secondary-side rectifying circuit, which converts an alternating-current power, outputted by the secondary winding of the transformer, to a direct-current power; a secondary-side electrolytic capacitor, which smoothes the direct-current power outputted from the secondary-side rectifying circuit; a switching circuit, which opens and closes the primary winding of the transformer that inputs the voltage of the primary-side electrolytic capacitor; a pulse width control circuit, which controls the pulse width of drive signals that control the opening and closing of the switching circuit; a primary-side electrolytic capacitor deterioration detecting circuit, which detects a deterioration of the primary-side electrolytic capacitor; and a stop-signal generation circuit that inputs a signal for deterioration detection from the primary-side electrolytic capacitor deterioration detecting circuit. The primary-side electrolytic capacitor deterioration detecting circuit inputs the voltage of the primary-side electrolytic capacitor, detects a deterioration of the primary-side electrolytic capacitor and outputs a deterioration detection signal to the stop-signal generation circuit, which thereby generates a stop signal that stops drive signals provided from the pulse width control circuit to the switching circuit then stops operation of a switching power supply circuit.

A switching power supply circuit for a third invention comprises: a transformer having a primary winding, a secondary winding and a tertiary winding; a primary-side rectifying circuit, which converts an alternating-current power to a direct-current power; a primary-side electrolytic capacitor, which smoothes the direct-current power outputted from the primary-side rectifying circuit; a secondary-side rectifying circuit, which converts an alternating-current power, outputted by the secondary winding of the transformer, to a direct-current power; a secondary-side electrolytic capacitor, which smoothes the direct-current power outputted from the secondary-side rectifying circuit; a tertiary-side rectifying and smoothing circuit, which converts an alternating-current power, outputted from the tertiary winding of the transformer, to a direct-current power then smoothes the rectified power; a switching circuit, which opens and closes the primary winding of the transformer that inputs the voltage of the primary-side electrolytic capacitor; a pulse width control circuit, which controls the pulse width of drive signals that control the opening and closing of the switching circuit; a primary-side electrolytic capacitor deterioration detecting circuit, which detects a deterioration of the primary-side electrolytic capacitor; a secondary-side electrolytic capacitor deterioration detecting circuit, which detects a deterioration of the secondary-side electrolytic capacitor; and a stop-signal generation circuit that inputs a signal for deterioration detection from the primary-side electrolytic capacitor deterioration detecting circuit and the secondary-side electrolytic capacitor deterioration detecting circuit. The primary-side electrolytic capacitor deterioration detecting circuit inputs the voltage of the primary-side electrolytic capacitor, and the secondary-side electrolytic capacitor deterioration detecting circuit inputs the output voltage of the tertiary-side rectifying and smoothing circuit, and either one of the two detecting circuits detects a deterioration of the primary-side or the secondary-side electrolytic capacitor, respectively, and outputs a deterioration detection signal to the stop-signal generation circuit, which thereby generates a stop signal that stops drive signals provided from the pulse width control circuit to the switching circuit then stops operation of a switching power supply circuit.

In such a configuration as described above, if the secondary-side electrolytic capacitor deteriorates more than the limit, the secondary-side electrolytic capacitor deterioration detecting circuit detects the deterioration, through the voltage increase of the tertiary winding driven by the secondary winding, makes the stop-signal generation circuit generate a stop signal for the pulse width control circuit, which in turn stops drive signals provided to the switching circuit then stops operation of the switching power supply circuit for the protection purpose.

In such a configuration as described above, if the primary-side electrolytic capacitor deteriorates more than the limit, the primary-side electrolytic capacitor deterioration detecting circuit detects the deterioration and makes the stop-signal generation circuit generate a stop signal for the pulse width control circuit, which in turn stops drive signals provided to the switching circuit then stops operation of the switching power supply circuit for the protection purpose.

In such a configuration for the third invention as described above, if the primary-side electrolytic capacitor deteriorates more than the limit, the primary-side electrolytic capacitor deterioration detecting circuit detects the deterioration, and if the secondary-side electrolytic capacitor deteriorates more than the limit, the secondary-side electrolytic capacitor deterioration detecting circuit detects the deterioration, through the voltage increase of the tertiary winding driven by the secondary winding. Either one of the deterioration detecting circuits makes the stop-signal generation circuit generate a stop signal for the pulse width control circuit, which in turn stops drive signals provided to the switching circuit then stops operation of the switching power supply circuit for the protection purpose.

### Effects of Invention

According to the present invention, a low cost and a small space switching power supply device can be provided with functions for detecting a deterioration of an electrolytic capacitor of a rectifying and smoothing circuit and avoiding disruption accidents thereby in advance, just by adding a simple circuit. The circuit according to the present invention can be integrated with the pulse width control circuit into an integrated circuit or IC.

### Brief Description of Drawing

FIG.1 depicts the circuit diagram for the configuration of a first embodiment of the present invention.
FIG.2 depicts relationships of characteristics between the pulse wave for driving a switching circuit by a pulse width control circuit and the output voltage of the secondary-side direct-current, in the first embodiment of the present invention.
FIG.3 depicts the circuit diagram for the configuration of the primary-side electrolytic capacitor deterioration detecting circuit, in the first embodiment of the present invention.
FIG.4 depicts the circuit diagram for the configuration of the secondary-side electrolytic capacitor deterioration detecting circuit, in the first embodiment of the present invention.
FIG.5 depicts the circuit diagram for the configuration of the stop-signal generation circuit, in the first embodiment of the present invention.
FIG.6 depicts the circuit diagram for the configuration of a second embodiment of the present invention.
F IG.7 depicts the circuit diagram for the configuration of a third embodiment of the present invention.
FIG.8 depicts the circuit diagram for the configuration that a misdetection prevention circuit is inserted between the primary-side rectifying circuit and the primary-side electrolytic capacitor in the first embodiment of the present invention.
FIG.9 depicts the circuit diagram for an example of the detail configuration of the misdetection prevention circuit.

### Embodiment of Invention

Embodiments of the present invention will be explained below, with reference to the drawings.

### First Embodiment

First, the circuit diagram of a first embodiment of the present invention will be explained.

### <Circuit Diagram on First Embodiment>

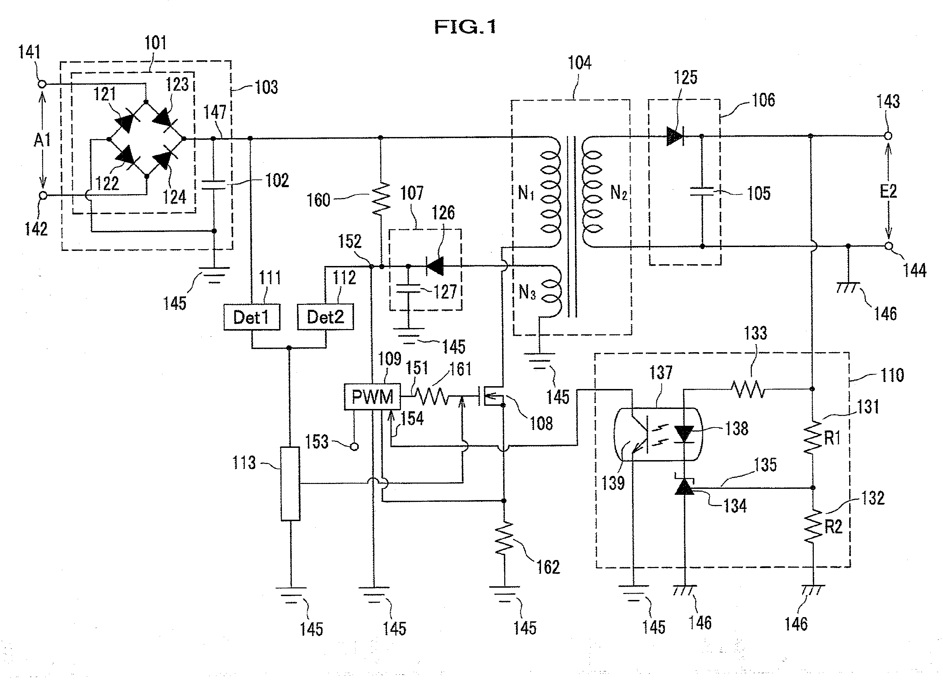

FIG.1 depicts the circuit diagram for the outline of a first embodiment of a switching power supply circuit provided with a protection circuit, according to the present invention.
In FIG.1, a primary-side rectifying circuit 101 outputs a direct-current power, including ripples, between a primary-side direct-current terminal 147 and a primary-side ground 145, after full-wave rectification of an alternating-current power (an alternating-current voltage A1) inputted to input terminals 141 and 142, by a bridge circuit composed of diodes 121 through 124. A primary-side electrolytic capacitor 102 is connected between the primary-side direct-current terminal 147 and the primary-side ground 145, and smoothes the direct-current power, including ripples, outputted from the primary-side rectifying circuit 101.
The primary-side rectifying circuit 101 and the primary-side electrolytic capacitor 102 compose a primary-side rectifying and smoothing circuit 103.

A transformer 104 is provided with a primary winding N1, a secondary winding N2 and a tertiary winding N3. Here the turn ratio of the primary winding N1, the secondary winding N2 and the tertiary winding N3 is set to the ratio N1:N2:N3, and an alternating-current voltage applied to both terminals of the primary winding N1 is outputted to both terminals of the secondary winding N2 as an alternating-current voltage which is approximately N2/N1 times to the voltage at N1 terminals. Likewise an alternating-current voltage is outputted to both terminals of the tertiary winding N3 as approximately N3/N2 times to the voltage at N2 terminals.
By the way, a circuit related to the primary winding N1, the secondary winding N2 and the tertiary winding N3 will be expressed hereinafter as a primary-side circuit, a secondary-side circuit and a tertiary-side circuit, respectively, as needed.

A first terminal of the primary winding N1 is connected to the primary-side direct-current terminal 147, a second terminal thereof to a drain terminal of a N-type Metal-Oxide-Semiconductor Field-Effect Transistor (MOSFET), which composes a switching circuit 108, and a source terminal of the N-type MOSFET to the primary-side ground 145, via a resistance 162.

A first terminal of the secondary winding N2 is connected to an anode of a diode 125, and a cathode of the diode 125 to a secondary-side direct-current output terminal 143. A second terminal of the secondary winding N2 is connected to a secondary-side direct-current output terminal 144 at a ground side. A secondary-side electrolytic capacitor 105 is connected between the secondary-side direct-current output terminal 143 and the secondary-side direct-current output terminal 144 at the ground side.

The diode 125 composes a secondary-side rectifying circuit and rectifies an alternating-current power induced at the secondary winding N2. The secondary-side electrolytic capacitor 105 smoothes a direct-current power, including ripples, outputted from the diode 125. The secondary-side rectifying circuit 125, composed of the diode 125, and the secondary-side electrolytic capacitor 105 compose a secondary-side rectifying and smoothing circuit 106, which outputs a direct-current power (a secondary-side direct-current output voltage E2) between the secondary-side direct-current output terminal 143 and the secondary-side direct-current output terminal 144 that is connected to a secondary-side ground 146.

As described before, the secondary-side direct-current output terminal 144 is connected to the secondary-side ground 146. The primary-side ground 145 and the secondary-side ground 146 are both grounds but galvanically isolated.

A first terminal of the tertiary winding N3 is connected to an anode of a diode 126, and a second terminal of the tertiary winding N3 to the primary-side ground 145. A smoothing capacitor 127 is connected between a cathode of the diode 126 and the primary-side ground 145. The diode 126 composes a tertiary-side rectifying circuit and rectifies an alternating-current power induced at the tertiary winding N3. The smoothing capacitor 127 smoothes the rectified direct-current power, including ripples, outputted from the diode 126. The tertiary-side rectifying circuit, composed of the diode 126, and the smoothing capacitor 127 compose a tertiary-side rectifying and smoothing circuit 107, which outputs a direct-current power that is rectified and smoothed out of the alternating-current power induced at the tertiary winding N3.

An output-error detection circuit 110 is a circuit for dividing the direct-current voltage (the secondary-side direct-current output voltage E2) that is outputted between the secondary-side direct-current output terminals 143 and 144, by resistances 131 and 132, and detecting an error (difference) between the divided voltage and a reference voltage that is built in a shunt regulator. The output-error detection circuit 110 is composed of resistances 131, 132 and 133, a shunt regulator 134, and a photo coupler 137 that is composed of a Light Emission Diode (LED) 138 and a photo transistor 139.

The divided voltage of the secondary-side direct-current voltage E2, by resistances 131 and 132, is inputted to a reference terminal 135 of the shunt regulator 134. An anode of the shunt regulator 134 is connected to the secondary-side ground 146, a cathode of the shunt regulator 134 to a cathode of the LED 138, an anode of the LED 138 to a first terminal of the resistance 133, and a second terminal of the resistance 133 to the secondary-side direct-current output terminal 143.

The light emission output from LED 138 is inputted to a base of the photo transistor 139. An emitter of the photo transistor 139 is connected to the primary-side ground 145, and a collector thereof is designed as an output terminal of the output-error detection circuit 110.
Note that the reason for using the photo coupler 137, composed of the LED 138 and the photo transistor 138, is because the primary-side ground 145 and the secondary-side ground 146 need to be galvanically isolated and it is impossible to send and receive electric signals directly between circuits connected to each of the grounds, other than converting to an optical signals.

In the configuration above, a decision is made whether the secondary-side direct-current output voltage E2 is higher or lower compared to a voltage of the reference voltage multiplied by (R1+R2)/R2.
When the secondary-side direct-current output voltage E2 is higher, the shunt regulator 134 is turned on, an electric current flows to the LED 138, and the LED 138 emits light for outputting an optical signal, making the photo transistor 139 receiving the signal that means ON-status.

On the contrary, when the secondary-side direct-current output voltage E2 is lower, the shunt regulator 134 is turned off and no electric current flows to the LED 138. Therefore the LED 138 does not emit light, making the photo transistor 139 in OFF-status.

The detected signal above, ON or OFF, by the photo transistor 139 is fed from the collector of the photo transistor 139, or the output terminal of the output-error detection circuit 110, to an input terminal 154 of a pulse width control circuit PWM 109.
Note that the output-error detection circuit is used for stabilizing the secondary-side direct-current output voltage E2, but not for detecting the deterioration of the secondary-side electrolytic capacitor 105 that will be explained later.

The power supply for the pulse width control circuit 109 is provided by a junction 152, via a resistance 160, when starting the switching power supply circuit, then by the junction 152 via an output from the tertiary-side rectifying and smoothing circuit 107, after the switching power supply circuit is started. An output terminal 151 of the pulse width control circuit 109 is connected to a gate (gate input-terminal) of the N-type MOSFET of the switching circuit 108, and controls ON-OFF of the N-type MOSFET.
Note that a pulse width of a drive signal waveform, outputted from the output terminal 151 of the pulse width control circuit 109, is controlled as being varied.
Conventional switching power supply circuits are basically configured as explained above.

In FIG.1, a primary-side electrolytic capacitor deterioration detecting circuit 111, a secondary-side electrolytic capacitor deterioration detecting circuit 112 and a stop-signal generation circuit 113 are those related to a protection function characterized in the present embodiment, but will be explained later as those are not directly related to a basic function of the switching power supply circuit.
Next, the basic operation of the conventional switching power supply circuit will be explained first.

### <Operation Overview of Switching Power Supply Circuit on First Embodiment>

As explained previously, the direct-current power rectified and smoothed from the alternating-current power, by the primary-side rectifying and smoothing circuit 103, is applied to both terminals of a series circuit, composed of the primary winding N1 of the transformer 104 and the N-type MOSFET of the switching circuit 108. The gate of the N-type MOSFET is connected to the output terminal 151 of the pulse width control circuit 109, via a resistance 161, for the ON-OFF control.

Therefore, the primary winding N1 of the transformer 104 has or does not have an electronic current flow, depending on the drive signal outputted from the pulse width control circuit 109. This leads to making an electric current flow on and off from the direct-current power accumulated in the primary-side electrolytic capacitor, and corresponds to generating an alternating-current out of a direct current. The generated alternating-current component is induced and transmitted from the primary winding N1 to the secondary winding N2 of the transformer 104. The induced alternating-current power at the secondary-side of the transformer 104 is converted to a direct-current power again by the secondary-side rectifying and smoothing circuit 106, and a direct-current power of the secondary-side direct-current output voltage E2 is generated between the secondary-side direct-current output terminals 143 and 144.

The secondary-side direct-current output voltage E2 is divided by the resistances R1 and R2 for comparison on the voltage value with the reference voltage that is built in the shunt regulator 134 of the output-error detection circuit 110, and the comparison result is sent, as an output signal from the output-error detection circuit 110, to the pulse width control circuit 109. As described before, the pulse width control circuit 109 changes the pulse width, reflecting the output signal from the output-error detection circuit 110, and controls duration of ON-OFF time of the switching circuit 108, whereby the secondary-side direct-current output voltage E2 is adjusted and kept at the specified voltage.

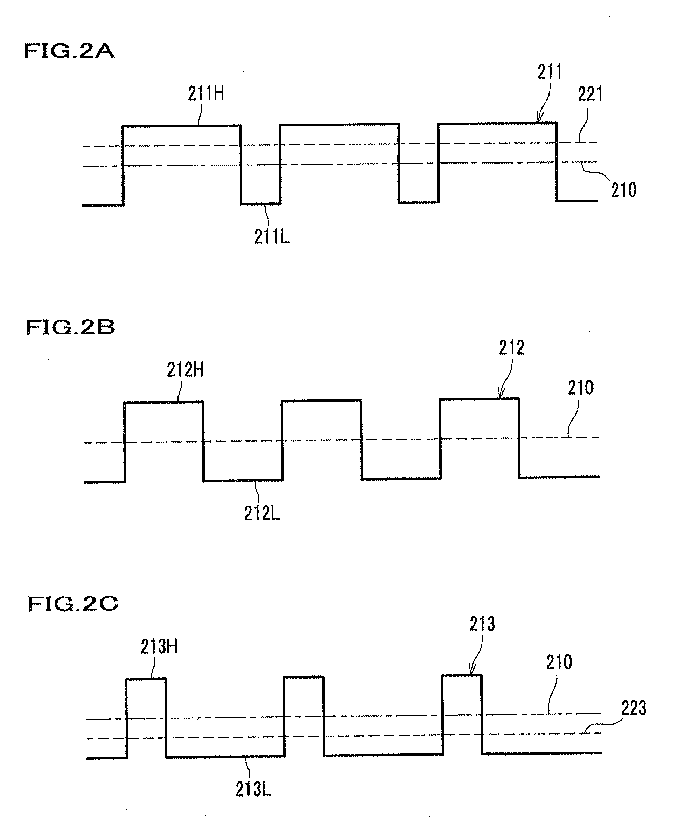

FIG.2 depicts the outline of the characteristics for transition of the secondary-side direct-current output voltage E2, as a result of ON-OFF control by the switching circuit 108, with which the electric current flows through the primary winding N1 of the transformer 104 or stops. Note that the chart focuses on the transition, so a value of the secondary-side direct-current output voltage E2 or a waveform of the control signal is not necessarily real.

FIG.2B is for a case that a duration 212H and a duration 212L is equal, each of which corresponds to the time when a control waveform 212 for ON-OFF control is high and low, and an average value of the secondary-side direct-current output voltage E2 is an average value 210.
FIG.2A is for a case that a duration 211H is longer than a duration 211L, each of which corresponds to the time when a control waveform 211 for ON-OFF control is high and low, and an average value of the secondary-side direct-current output voltage E2 is an average value 221, which is higher than the average value 210 in the case of the duration 212H and 212L being equal, as previously described.
FIG.2C is for a case that a duration 213H is shorter than a duration 213L, each of which corresponds to the time when a control waveform 213 for ON-OFF control is high and low, and an average value of the secondary-side direct-current output voltage E2 is an average value 223, which is lower than the average value 210 in the case of the duration 212H and 212L being equal, as previously described.

As explained above, the secondary-side direct-current output voltage E2 varies by controlling the duration of time (a pulse width) that an electric current flows through the primary winding N1 of the transformer 104, according to the ON-OFF control by the switching circuit 108.
A conventional switching power supply device keeps the secondary-side direct-current output voltage E2 at a specified voltage, under the control described above.

### <Protection Circuit of Switching Power Supply Circuit on First Embodiment>

Next, a protection circuit of the switching power supply circuit will be explained, starting with an electrolytic capacitor in the switching power supply circuit for which the protection circuit is required.

### «Electrolytic Capacitor on First Embodiment»

In the switching power supply circuit (device), as described above, the primary-side electrolytic capacitor 102 and the secondary-side electrolytic capacitor 105 are mounted as a smoothing capacitor for the primary-side rectifying and smoothing circuit 103 and the secondary-side rectifying and smoothing circuit 106, respectively. In these electrolytic capacitors, as the deterioration grows worse, the Equivalent Series Resistance (ESR) increases and the electrostatic capacity decreases.

If the ESR (R) increases and the electric current (I) flows through an electrolytic capacitor, the electrolytic capacitor itself will bear a high temperature caused by the Joule heat (calculated as I²R), and sometimes burst as a result of increasing inner pressure.
In addition, the decreasing electrostatic capacity of an electrolytic capacitor can cause decreasing output characteristics of the switching power supply circuit (device) or abnormal heat at other parts.
Therefore, as described before, when the deterioration of an electrolytic capacitor reaches a limit, the deterioration needs to be detected and an action should be taken.

### «Overview of Protection Circuit on First Embodiment»

Due to the reason above, the primary-side electrolytic capacitor deterioration detecting circuit (Det1) 111 and the secondary-side electrolytic capacitor deterioration detecting circuit (Det2) 112 are provided in FIG.1 for detecting a deterioration of the primary-side electrolytic capacitor 102 and the secondary-side electrolytic capacitor 105, respectively.
Upon receiving a deterioration detection signal either from the primary-side electrolytic capacitor deterioration detecting circuit 111 or the secondary-side electrolytic capacitor deterioration detecting circuit 112, the stop-signal generation circuit 113 outputs a signal to the gate of the N-type MOSFET of the switching circuit 108, causing the drive signal from the pulse width control circuit 109 stopped then the operation of the switching power supply circuit stopped.

This leads to the reduction of the ripple current flowing to the primary-side electrolytic capacitor 102 and the secondary-side electrolytic capacitor 105. In this way, the high temperature and the burst thereof are prevented in advance, as well as any influence to the surrounding parts.

### <<Primary-side Electrolytic Capacitor Deterioration detecting Circuit on First Embodiment>>

Specific circuit configuration will be explained next for the primary-side electrolytic capacitor deterioration detecting circuit 111.

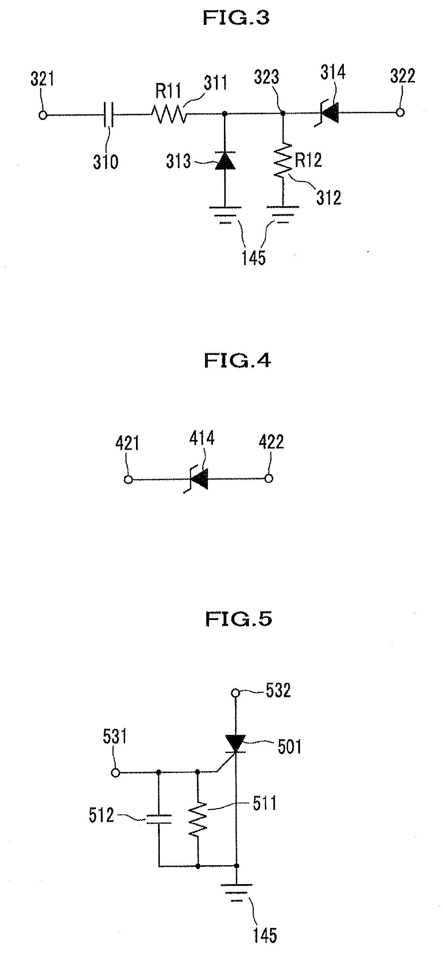

FIG.3 depicts a circuit diagram for the primary-side electrolytic capacitor deterioration detecting circuit 111.
In FIG.3, a first terminal of a capacitor 310 is connected to an input terminal 321 for the primary-side electrolytic capacitor deterioration detecting circuit 111, and a second terminal of the capacitor 310 to a first terminal of a resistance 311 (R11). A resistance 312 (R12) is connected between a second terminal of the resistance 311 and the primary-side ground 145. An anode of a diode 313 is connected to the primary-side ground 145, and a cathode to the second terminal of the resistance 311. A cathode of a Zener diode 314 is connected to the second terminal of the resistance 311, and an anode of the Zener diode 314 to an output terminal 322 for the primary-side electrolytic capacitor deterioration detecting circuit 111.

A direct current component is removed by the capacitor 310 and a voltage is divided by resistances 311 and 312 to an appropriate value, then ripples (alternating-current components) of signals, inputted to the input terminal 321, are detected at a dividing point 323.
The diode 313 removes a negative component of the signal and extracts a positive component only.
The Zener diode 314 is turned on (avalanche breakdown) when the ripples of signals detected above exceed a specific voltage (Zener voltage or avalanche voltage), and outputs a trigger signal to the stop-signal generation circuit 113 (ref; FIG.1) from the output terminal 322 for the primary-side electrolytic capacitor deterioration detecting circuit 111.

Note that the input terminal 321 for the primary-side electrolytic capacitor deterioration detecting circuit 111 is connected to the primary-side direct-current terminal 147, detecting a deterioration status of the primary-side electrolytic capacitor 102 based on the ripple voltage thereof. It is because the ripple voltage increases at the primary-side direct-current terminal 147 when the primary-side electrolytic capacitor 102 deteriorates, followed by an increase of the ESR and a decrease of the electrostatic capacity.

In addition, a voltage applying to the Zener diode 314 is adjustable, as the voltage varies at the dividing point 323 by changing a resistance value ratio (R11/R12) of the resistance 311 (R11) and the resistance 312 (R12). As there is a constraint in selecting the Zener voltage characteristic of the Zener diode 314, the resistance ratio (R11/R12) can be adjusted, after selecting the Zener diode 314, so that an appropriate voltage is applied in line with the characteristic of the selected Zener diode 314.

### <<Secondary-side Electrolytic Capacitor Deterioration detecting Circuit on First Embodiment>>

Next, specific circuit configuration will be explained for the secondary-side electrolytic capacitor deterioration detecting circuit 112.
FIG.4 depicts a circuit diagram for the secondary-side electrolytic capacitor deterioration detecting circuit 112, composed of a Zener diode 414. A cathode of the Zener diode 414 is connected to an input terminal 421 of the secondary-side electrolytic capacitor deterioration detecting circuit 112, which in turn is connected to the output terminal 152 of the tertiary-side rectifying and smoothing circuit 107. An anode of the Zener diode 414 is connected to an output terminal 422 of the secondary-side electrolytic capacitor deterioration detecting circuit 112.

The tertiary-side rectifying and smoothing circuit 107 receives input of an alternating-current power, induced by the tertiary winding N3 of the transformer 104, which in turn is induced by the secondary winding N2. Therefore, if the secondary-side electrolytic capacitor 105 deteriorates and the ESR increases, a voltage produced at both terminals of the secondary-side electrolytic capacitor 105 also increases, being propagated from the secondary winding N2 to the tertiary winding N3, then an output voltage of the tertiary-side rectifying and smoothing circuit 107 increases as well. When the output voltage increases, as the secondary-side electrolytic capacitor deteriorates, beyond a predetermined voltage, the Zener diode 414 is turned on and outputs a trigger signal to the stop-signal generation circuit 113 (ref; FIG.1) from the output terminal 422 of the secondary-side electrolytic capacitor deterioration detecting circuit 112.

Note that it is mainly because characteristics of transformer is effectively utilized that the secondary-side electrolytic capacitor deterioration detecting circuit 112 is a simple circuit composed of small number of elements, compared with the primary-side electrolytic capacitor deterioration detecting circuit 111.
This is a great advantage of using the output from the tertiary-side rectifying and smoothing circuit 107 for detecting a deterioration of the secondary-side electrolytic capacitor 105, and also the reason for the cost and the installation space being reduced.

In addition, when detecting a deterioration of the secondary-side electrolytic capacitor 105, neither a ripple voltage detection circuit, composed of a transistor and others, nor a photo coupler is used as seen in a patent document JP2000-32747 A, so it is possible to achieve further reduction of the cost and the circuit space.

### <<Stop-signal generation Circuit on First Embodiment>>

Next description will be for the specific circuit configuration of the stop-signal generation circuit 113. FIG.5 depicts a circuit diagram for the stop-signal generation circuit 113.
In FIG.5, a cathode of a thyristor 501 is connected to the primary-side ground 145, and an anode and a gate are connected to an output terminal 532 and an input terminal 531 of the stop-signal generation circuit 113, respectively.
A resistance 511 is connected between the input terminal 531 of the stop-signal generation circuit 113 and the primary-side ground 145.
In addition, a capacitor 512 can be connected between the input terminal 531 of the stop-signal generation circuit 113 and the primary-side ground 145, for stabilized operation of the circuit (prevention of malfunction caused by noises).

The resistance 511 determines a bias voltage of the input terminal 531. The input terminal 531 of the stop-signal generation circuit 113 is connected to the output terminal 322 of the primary-side electrolytic capacitor deterioration detecting circuit 111 and the output terminal 422 of the secondary-side electrolytic capacitor deterioration detecting circuit 112. Once there is a trigger signal as the deterioration detection signal either from the primary-side electrolytic capacitor deterioration detecting circuit 111 or the secondary-side electrolytic capacitor deterioration detecting circuit 112, the thyristor 501 is turned on. As a result, the output terminal 532 of the stop-signal generation circuit 113 becomes almost at the same potential as the primary-side ground 145.

The output terminal 532 of the stop-signal generation circuit 113 is connected to the gate of the N-type MOSFET of the switching circuit 108 in FIG.1. Once the output terminal 532 becomes almost at the same potential as the primary-side ground 145, by the trigger signal, the gate of the N-type MOSFET is fixed to the potential of the primary-side ground 145 and the N-type MOSFET becomes OFF-status. By the N-type MOSFET becoming OFF-status, an electric current stops flowing through the primary winding N1, which in turn stops flowing through the secondary winding N2. In other words, the switching power supply circuit stops operation.

### <<Operation of Protection Circuit on First Embodiment>>

The configuration and the operation for each of circuits were explained above, but operation overview as a whole will be explained below, even though some might be duplicated.
In the switching power supply circuit, the primary-side electrolytic capacitor 102 and the secondary-side electrolytic capacitor 105 are mounted as a smoothing capacitor in the primary-side circuit and the secondary-side circuit, respectively. The primary-side electrolytic capacitor deterioration detecting circuit 111 is provided as a means for detecting a deterioration of the primary-side electrolytic capacitor 102, and the secondary-side electrolytic capacitor deterioration detecting circuit 112 is provided as a means for detecting a deterioration of the secondary-side electrolytic capacitor 105.

If the primary-side electrolytic capacitor 102 deteriorates, the decrease of electrostatic capacity and the increase of ESR occur and, as a result, the ripple voltage increases for the primary-side electrolytic capacitor 102. Likewise, if the secondary-side electrolytic capacitor 105 deteriorates, the decrease of electrostatic capacity and the increase of ESR occur and, as a result, the voltage increases for both terminals of the secondary-side electrolytic capacitor 105. Then, the fact that the ripple voltage or the terminal voltage exceeded the predetermined voltage is detected by the primary-side electrolytic capacitor deterioration detecting circuit 111 or the secondary-side electrolytic capacitor deterioration detecting circuit 112, and the trigger signal is sent to the stop-signal generation circuit. Upon receiving the trigger signal, the stop-signal generation circuit 113 stops the drive signal from the output terminal 151 of the pulse width control circuit 109 or, in other words, the gate of the N-type MOSFET of the switching circuit 108 becomes almost at the same potential as the primary-side ground 145.

Accordingly the switching operation of the switching circuit 108 stops, then the operation of the switching power supply circuit (device) stops with no more output. As the operation of the switching power supply circuit stops, the electric current does not flow anymore to the primary-side electrolytic capacitor 102 and the secondary-side electrolytic capacitor 105, and Joule heat stops being generated, resulted in avoiding heat generation and increase of the inner pressure of electrolytic capacitors, as well as abnormal heat of other parts, thus protecting the switching power supply circuit.

### «Complement to First Embodiment»

Note that the switching power supply circuit is provided with the output-error detection circuit 110 in FIG.1, as previously explained, for controlling the secondary-side direct-current output voltage E2 to keep the predetermined voltage. Therefore, the secondary-side direct-current output voltage E2 keeps predetermined voltage, even with some deterioration either at the primary-side electrolytic capacitor 102 or the secondary-side electrolytic capacitor 105, fluctuation of the input voltage A1 from AC power supply, fluctuation of direct-current load, or fluctuation of any other elements.
However, if the primary-side electrolytic capacitor 102 or the secondary-side electrolytic capacitor 105 deteriorates more than the limit, the anomaly is detected either by the primary-side electrolytic capacitor deterioration detecting circuit 111 or by the secondary-side electrolytic capacitor deterioration detecting circuit 112.

### Second Embodiment

### «Circuit Configuration on Second Embodiment»

A second embodiment will be explained next.

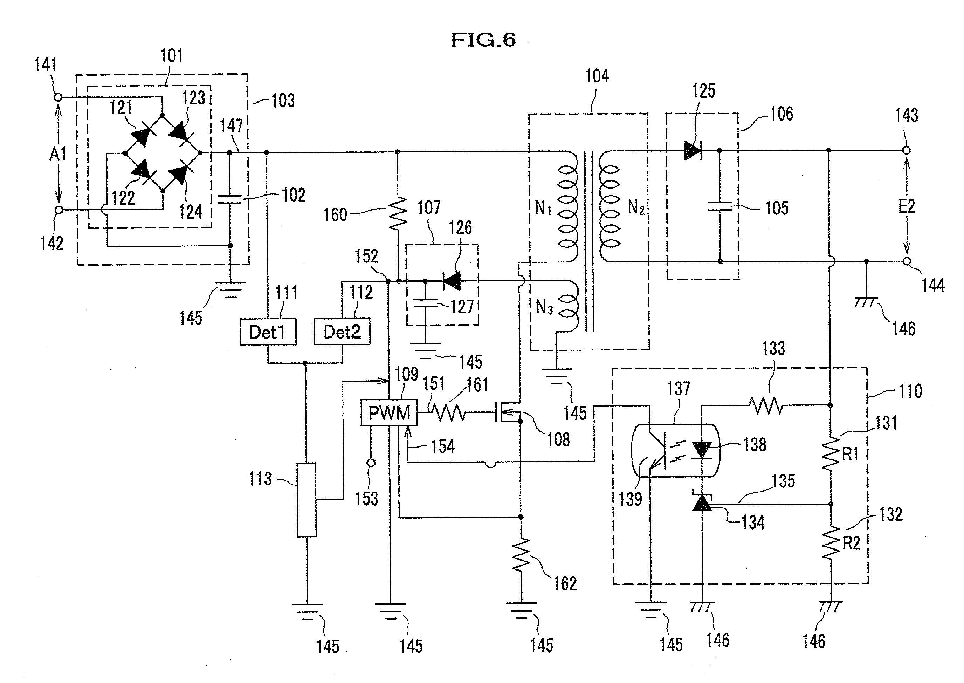

FIG.6 depicts the circuit configuration of a second embodiment of the present invention.
The circuit configuration in FIG.6 is based on FIG.1 for the first embodiment, so they are almost identical. The difference is that the output signal from the stop-signal generation circuit 113 is connected to the gate of N-type MOSFET of the switching circuit 108 in FIG.1, whereas that is connected to the output terminal 152 of the tertiary-side rectifying and smoothing circuit 107 in FIG.6, where the output terminal 152 is also a power supply terminal for the pulse width control circuit 109.
Other than above are same in FIG.6 and FIG.1, and no explanation will be made for them.

### «Circuit Operation on Second Embodiment»

In FIG.6, if the primary-side electrolytic capacitor deterioration detecting circuit 111 or the secondary-side electrolytic capacitor deterioration detecting circuit 112 detects a deterioration of either the primary-side electrolytic capacitor 102 or the secondary-side electrolytic capacitor 105, respectively, and the output signal from the stop-signal generation circuit 113 becomes almost at the same potential as the primary-side ground 145, then the output terminal 152 of the tertiary-side rectifying and smoothing circuit 107 becomes almost at the same potential as the primary-side ground 145 too, wherein the output terminal 152 is also a power supply terminal for the pulse width control circuit 109. In effect, the power supply is stopped for the pulse width control circuit 109, which in turn stops providing the drive signal from the output terminal 151 to the gate of the N-type MOSFET of the switching circuit 108. As a result, the operation of the switching power supply circuit discontinues, so the electric current does not flow anymore to the primary-side electrolytic capacitor 102 and the secondary-side electrolytic capacitor 105, and Joule heat stops being generated, which in turn avoiding heat generation and increase of the inner pressure of electrolytic capacitors, as well as abnormal heat of other parts, thus protecting the switching power supply circuit.

### Third Embodiment

### «Circuit Configuration on Third Embodiment»

A third embodiment will be explained next.

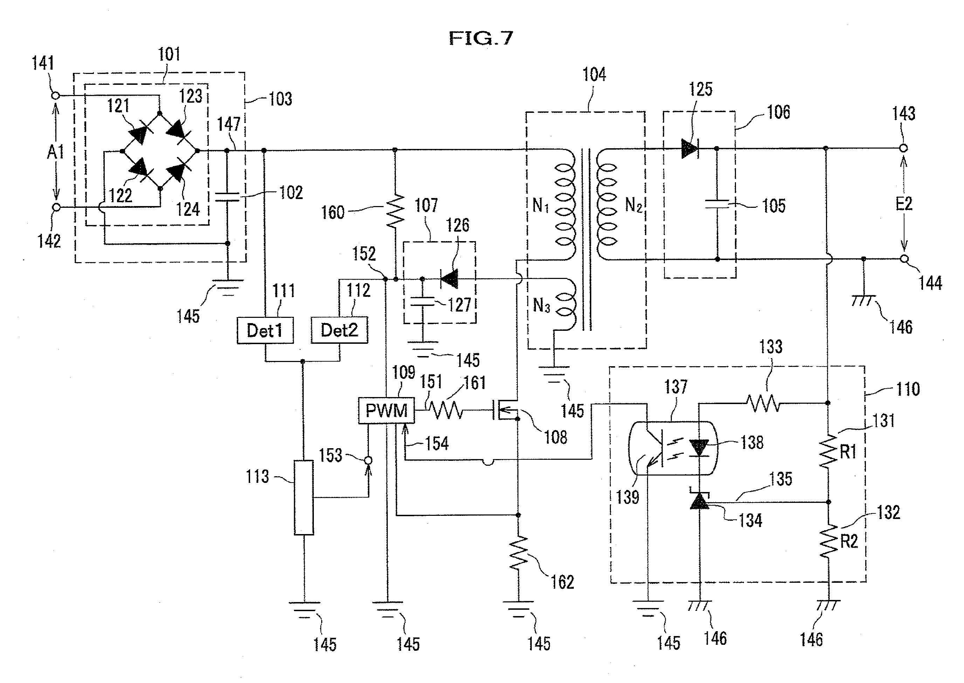

FIG.7 depicts the circuit configuration of a third embodiment of the present invention.
The circuit configuration in FIG.7 is based on FIG.1 for the first embodiment, so they are almost identical. The difference is that the output signal from the stop-signal generation circuit 113 is connected to the gate of the N-type MOSFET of the switching circuit 108 in FIG.1, whereas that is connected to a control terminal 153 of the pulse width control circuit 109, in FIG.7, where the terminal controls the output signal provided from the circuit.
Other than above are same in FIG.7 and FIG.1, and no explanation will be made for them.

### «Circuit Operation on Third Embodiment»

In FIG.7, if the primary-side electrolytic capacitor deterioration detecting circuit 111 or the secondary-side electrolytic capacitor deterioration detecting circuit 112 detects a deterioration of either the primary-side electrolytic capacitor 102 or the secondary-side electrolytic capacitor 105, respectively, and the output signal from the stop-signal generation circuit 113 becomes almost at the same potential as the primary-side ground 145, then the control terminal 153 of the pulse width control 109 becomes almost at the same potential as the primary-side ground 145 too. This causes the pulse width control circuit 109 to stop its oscillation for providing drive signal from the output terminal 151.

As a result, the gate of the N-type MOSFET of the switching circuit 108 stops being provided with the drive signal, so the gate is almost fixed to the potential of the primary-side ground 145. As the operation of the switching power supply circuit stops, the electric current does not flow anymore to the primary-side electrolytic capacitor 102 and the secondary-side electrolytic capacitor 105, and Joule heat stops being generated, which in turn avoiding heat generation and increase of the inner pressure of electrolytic capacitors, as well as abnormal heat of other parts, thus protecting the switching power supply circuit.

### Other Embodiment

In FIG.3, the circuit diagram was depicted for the primary-side electrolytic capacitor deterioration detecting circuit 111 provided with resistances 311 and 312, but either one or both of the resistances can be removed, depending on the specification of the primary-side direct-current voltage.

In FIG.3, FIG.4 and FIG.5, the circuit diagrams were depicted for the primary-side electrolytic capacitor deterioration detecting circuit 111, the secondary-side electrolytic capacitor deterioration detecting circuit 112 and the stop-signal generation circuit 113, but these are no more than examples. Different circuit configurations can be possible with equivalent functions.
In addition, these circuits 111, 112 and 113 can be integrated with the pulse width control circuit 109 as an Integrated Circuit (IC) module, for compactness, in terms of occupancy footprint (space) and number of circuit components.

In FIG.1, the switching circuit 108 was depicted with the N-type MOSFET as an example, but a P-type MOSFET can be used by changing the polarity of the drive signal waveform from the output terminal 151 of the pulse width control circuit 109.
Further, a device might not be limited to a MOSFET, and Insulated Gate Bipolar Transistor (IGBT) can be used instead, for example.

Thermal fuses can be used such that they are contacted closely with each of the primary-side electrolytic capacitor 102 and the secondary-side electrolytic capacitor 105, respectively, and detect the increasing temperature caused by deterioration of each of the electrolytic capacitors, until at least one of them is "blown", at which time the drive signal from the pulse width control circuit 109 is stopped thus protecting the switching power supply circuit (device).

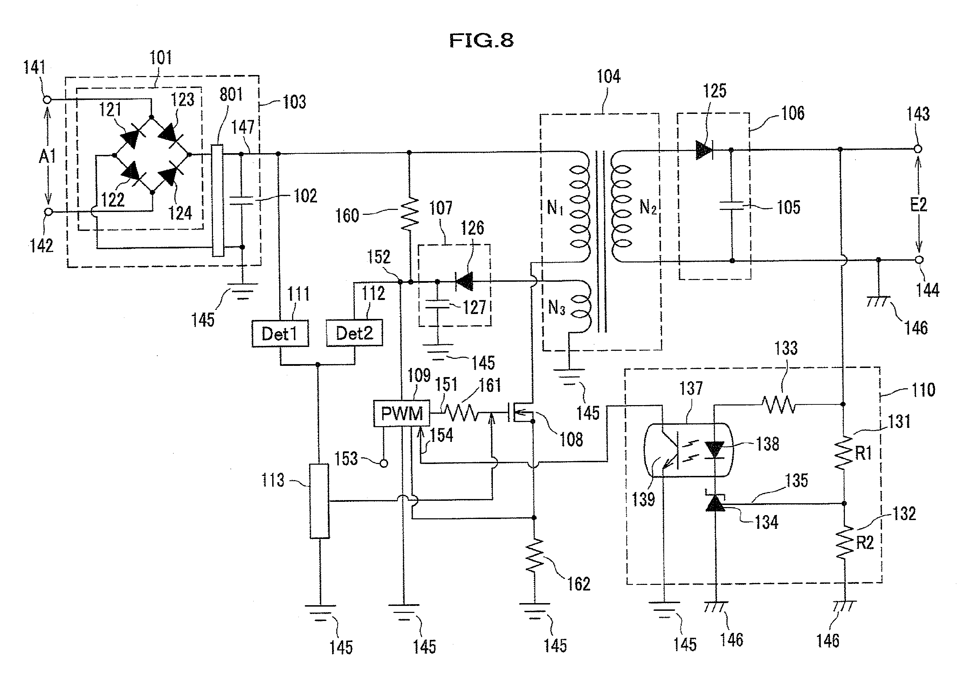

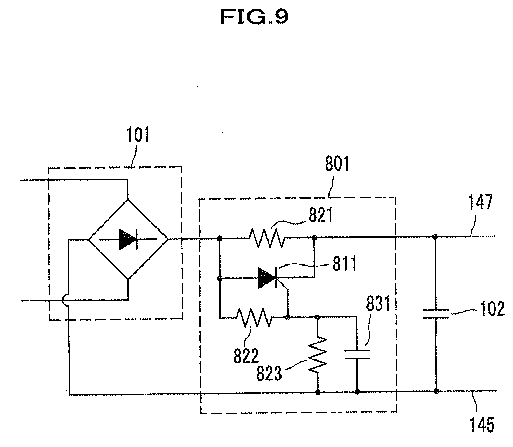

A misdetection prevention circuit 801 (ref; FIG.8) can be inserted between the primary-side rectifying circuit 101 and the primary-side electrolytic capacitor 102, in order to prevent a misdetection of the deterioration of the primary-side electrolytic capacitor by the primary-side electrolytic capacitor deterioration detecting circuit 111 at a power activation time.
As explained before, the primary-side electrolytic capacitor deterioration detecting circuit 111 makes a decision that the primary-side electrolytic capacitor deteriorated when the ripple voltage occurring at both terminals of the primary-side electrolytic capacitor 102 exceeds the predetermined reference voltage, and stops operation of the switching circuit 108 by the pulse width control circuit 109. However, the frequency of the ripple voltage to be detected and the converted frequency value from starting time (reciprocal thereof) of the terminal voltage at the primary-side electrolytic capacitor during the power activation time are very close, so the primary-side electrolytic capacitor deterioration detecting circuit 111 can cause a misdetection and stop the operation of the switching circuit 108, depending on the timing of the power activation. In such a case, the switching power supply circuit may not work normally.
The misdetection prevention circuit 801 is for preventing such a misdetection at the power activation time.
Next, the misdetection prevention circuit 801 will be explained, with reference to FIG.8 and FIG.9.

### <<Misdetection Prevention Circuit»

FIG.8 depicts the circuit diagram for the configuration that a misdetection prevention circuit is inserted between the primary-side rectifying circuit 101 and the primary-side electrolytic capacitor 102 in the first embodiment of the present invention.
FIG.9 depicts the circuit diagram for an example of the detail configuration of the misdetection prevention circuit 801.
In FIG.9, a resistance (a first resistance) 821 is connected between a first direct-current output terminal (hereinafter referred to as the first direct-current output terminal) and the primary-side direct-current terminal 147, wherein the first direct-current output terminal is a connection point of cathodes of each of the diode 123 (ref; FIG.8) and the diode 124 (ref; FIG.8) in the primary-side rectifying circuit 101. One terminal of a resistance (a second resistance) 822 is connected to the first direct-current output terminal of the primary-side rectifying circuit 101, and the other terminal to one terminal of a capacitor 831. The other terminal of the capacitor 831 is connected to the primary-side ground 145. A resistance (a third resistance) 823 is connected in parallel to the capacitor 831.
Note that a second direct-current output terminal (hereinafter referred to as the second direct-current output terminal) is connected to the primary-side ground 145, wherein the second direct-current output terminal is a connection point of anodes of each of the diode 121 (ref; FIG.8) and the diode 122 (ref; FIG.8) in the primary-side rectifying circuit 101.

An anode of a thyristor 811 is connected to the first direct-current output terminal of the primary-side rectifying circuit 101, a cathode of the thyristor 811 to the primary-side direct-current output terminal 147, and a gate of the thyristor 811 to a connection point of a series connection of the resistance 822 and the capacitor 831.
The primary-side electrolytic capacitor 102 is connected between the primary-side direct-current output terminal 147 and the primary-side ground 145, as depicted in FIG.8 and FIG.9. Note that the primary-side ground 145 is connected to the second direct-current output terminal of the primary-side rectifying circuit 101.
By the way, the primary-side rectifying circuit 101 in FIG.9 is expressed with a simplified form of the diode bridge of the primary-side rectifying circuit 101 in FIG.8.

As explained above, the resistance 821 is inserted serially between the first direct-current output terminal of the primary-side rectifying circuit 101 and the primary-side electrolytic capacitor 102, in order to slow down the starting time right after the power activation.
Right after the power activation, the voltage at both terminals of the primary-side electrolytic capacitor 102 rises according to passing of an electric current through the resistance 821 and the primary-side electrolytic capacitor 102, with a time constant determined by these two circuit components. Note that the time constant is specified bigger enough than the reciprocal of the frequency of the ripple voltage occurring at both terminals of the primary-side electrolytic capacitor 102 when that deteriorates.
Right after the power activation, the gate voltage of the thyristor 811 also rises slowly with a time constant determined by the resistances 822 and 823 and the capacitor 831. As almost no electric charge is accumulated in the capacitor 831 right after the power activation, the equivalent impedance is smaller enough than the resistance 823, and the capacitor 831 is dominant than the resistance 823 as an electric current pass, then the gate voltage of the thyristor 811 rises slowly from zero (the potential of the primary-side ground 145), with the time constant determined by the resistance 822 and the capacitor 831. Therefore the thyristor 811 is in OFF-status right after the power activation.

After long enough time since the power activation, compared to the time constant determined by the resistance 821 and the primary-side electrolytic capacitor 102, the voltage at both terminals of the primary-side electrolytic capacitor 102 reaches the voltage enough to operate the switching power supply circuit. However the resistance 821 exists between the primary-side rectifying circuit 101 and the primary-side electrolytic capacitor 102, inhibiting enough current flowing for the operation of the switching power supply circuit or causing big energy loss.
As the electric charges become accumulated in the capacitor 831, after the power activation, the equivalent impedance of the capacitor 831 increases, and the gate voltage of the thyristor 811 arises with the time constant determined by the resistances 822 and 823 and the capacitor 831, eventually reaching the trigger voltage to turn on the thyristor 811.
The thyristor 811 has a very small internal resistance value while in ON-status, compared with a resistance value of the resistance 821, connected therewith in parallel, so an electric current, flowing from the primary-side rectifying circuit 101 to the primary-side electrolytic capacitor 102 or the primary-side direct-current output terminal 147, passes through the thyristor 811.

In addition, as the internal resistance of the thyristor 811 is small enough while in ON-status, energy loss should be very small even by adding the misdetection prevention circuit 801.
When the electric charges are accumulated enough in the capacitor 831, the equivalent impedance becomes too high, possibly causing the gate voltage of the thyristor 811 unstable. In order to avoid such situation and also to remove accumulated electric charges in the capacitor 831 at the power shutdown time, the resistance 823 is connected in parallel to the capacitor 831. Note that when the electric charges are accumulated enough in the capacitor 831, the gate voltage of the thyristor 811 becomes the divided voltage, by the resistances 822 and 823, of the voltage between the first and the second direct-current output terminal in the primary-side rectifying circuit 101.
By providing the misdetection prevention circuit 801 configured as above, malfunctions of the switching power supply circuit can be prevented from occurring, due to a misdetection by the primary-side electrolytic capacitor deterioration detecting circuit 111 at the power activation time.

Note that the misdetection prevention circuit 801 depicted in FIG.9 is just an example of the possible circuit configurations.
For example, the circuit would operate almost the same even without the resistance 823.
In place of the thyristor 811, a Metal-Oxide-Semiconductor Field-Effect Transistor (MOSFET) or a Insulated Gate Bipolar Transistor (IGBT) can be used.
In the circuit configuration depicted in FIG.8, the misdetection prevention circuit 801 is inserted into the first embodiment of FIG.1, but that insertion would also be effective for the second embodiment of FIG.6 or the third embodiment of FIG.7.

### Supplement for Invention and Embodiment

As described above, the switching power supply circuit provided with protection function, in the embodiments, detects the deterioration of the electrolytic capacitors in the smoothing circuits of the primary-side circuit and the secondary-side circuit, and stops operation of the switching power supply circuit automatically, thus preventing a burst accident caused by the deterioration of one or more of the electrolytic capacitors in advance.
Especially, the secondary-side electrolytic capacitor deterioration detecting circuit and its circuit configuration can be reduced much, by the methods and the circuit to detect the deterioration of the secondary-side electrolytic capacitor 105 by the Zener diode 414 based on the output voltage from the tertiary-side rectifying and smoothing circuit 107, compared with the disclosed technique in the patent document previously mentioned, thereby allowing tremendous effects for realizing compactness, in terms of number of circuit components and occupancy footprint (space) for components and wirings, and reducing cost as well.
In addition, such methods and circuits of the embodiments can be realized just by adding simple circuit components, without modifying the already-existing switching power supply circuit.

**Legend for Reference Numeral**

| | |
|---|---|
| 101 | Primary-side rectifying circuit |
| 102 | Primary-side electrolytic capacitor |
| 103 | Primary-side rectifying and smoothing circuit |
| 104 | Transformer |
| 105 | Secondary-side electrolytic capacitor |
| 106 | Secondary-side rectifying and smoothing circuit |
| 107 | Tertiary-side rectifying and smoothing circuit |
| 108 | Switching circuit |
| 109 | Pulse width control circuit (PWM) |
| 110 | Output-error detection circuit |
| 111 | Primary-side electrolytic capacitor deterioration detecting circuit (Det 1) |
| 112 | Secondary-side electrolytic capacitor deterioration detecting circuit (Det 2) |
| 113 | Stop-signal generation circuit |
| 121, 122, 123, 124 | Diodes |
| 125 | Diode, Secondary-side rectifying circuit |
| 126 | Diode, Tertiary-side rectifying circuit |
| 127 | Smoothing capacitor |
| 131 | Resistance (R1) |
| 132 | Resistance (R2) |
| 133, 160, 161, 162, 511 | Resistances |
| 134 | Shunt regurator |
| 135 | Reference terminal of Shunt regulator |
| 137 | Photo coupler |
| 138 | Light Emission Diode (LED) |
| 139 | Photo transistor |
| 141, 142 | Alternating-current input terminals |
| 143, 144 | Secondary-side direct-current output terminals |
| 145 | Primary-side ground |
| 146 | Secondary-side ground |
| 147 | Primary-side direct-current terminal |
| 151 | Output terminal |
| 152 | Output terminal of Tertiary-side rectifying and smoothing circuit |
| 153 | Control terminal |
| 154 | Input terminal of Pulse width control circuit |
| 310, 512, 831 | Capacitors |
| 311 | Resistance (R11) |
| 312 | Resistance (R12) |
| 313 | Diode |
| 314, 414 | Zener diodes |
| 321, 421, 531 | Input terminals |
| 322, 422, 532 | Output terminals |
| 323 | Dividing point |
| 501, 811 | Thyristors |
| 801 | Misdetection prevention circuit |
| 821 | Resistance (a first resistance) |
| 822 | Resistance (a second resistance) |
| 823 | Resistance (a third resistance) |
| A1 | Alternating-current voltage, Input voltage |
| E2 | Secondary-side direct-current output voltage |
| N1 | Primary winding, Primary winding turns |
| N2 | Secondary winding, Secondary winding turns |
| N3 | Tertiary winding, Tertiary winding turns |

## Claims

1. A switching power supply circuit, provided with a protection function, comprising:
a transformer having a primary winding, a secondary winding and a tertiary winding;
a primary-side rectifying circuit configured to convert an alternating-current power to a direct-current power;
a primary-side electrolytic capacitor for smoothing the direct-current power from the primary-side rectifying circuit;
a secondary-side rectifying circuit for converting an alternating-current power, outputted by the secondary winding of the transformer, to a direct-current power;
a secondary-side electrolytic capacitor for smoothing the direct-current power outputted from the secondary-side rectifying circuit;
a switching circuit for repeatedly opening and closing the primary winding of the transformer that inputs a voltage of the primary-side electrolytic capacitor;
a pulse width control circuit for controlling the pulse width of drive signals that control opening and closing of the switching circuit;
a primary-side electrolytic capacitor deterioration detecting circuit for detecting deterioration of the primary-side electrolytic capacitor; and
a stop-signal generation circuit for inputting a deterioration detection signal from the primary-side electrolytic capacitor deterioration detecting circuit, wherein the protection function is provided in such a way that
the primary-side electrolytic capacitor deterioration detecting circuit inputs a voltage of the primary-side electrolytic capacitor; and
the stop-signal generation circuit generates a stop-signal triggered by a deterioration detection signal from the primary-side electrolytic capacitor deterioration detecting circuit, then in turn the pulse width control circuit discontinues providing drive signals to the switching circuit, causing the operation of the switching power supply circuit stopped.

2. A switching power supply circuit, provided with a protection function, comprising:
a transformer having a primary winding, a secondary winding and a tertiary winding;
a primary-side rectifying circuit for converting an alternating-current power to a direct-current power;
a primary-side electrolytic capacitor for smoothing the direct-current power from the primary-side rectifying circuit;
a secondary-side rectifying circuit for converting an alternating-current power, outputted by the secondary winding of the transformer, to a direct-current power;
a secondary-side electrolytic capacitor for smoothing the direct-current power outputted from the secondary-side rectifying circuit;
a tertiary-side rectifying and smoothing circuit for converting an alternating-current power, outputted by the tertiary winding of the transformer, to a direct-current power and smoothing thereof;
a switching circuit for repeatedly opening and closing the primary winding of the transformer that inputs a voltage of the primary-side electrolytic capacitor;
a pulse width control circuit for controlling the pulse width of drive signals that control opening and closing of the switching circuit;
a secondary-side electrolytic capacitor deterioration detecting circuit for detecting deterioration of the secondary-side electrolytic capacitor; and
a stop-signal generation circuit for inputting a deterioration detection signal from the secondary-side electrolytic capacitor deterioration detecting circuit, wherein the protection function is provided in such a way that
the secondary-side electrolytic capacitor deterioration detecting circuit inputs an output voltage of the tertiary-side rectifying and smoothing circuit; and
the stop-signal generation circuit generates a stop-signal triggered by a deterioration detection signal from the secondary-side electrolytic capacitor deterioration detecting circuit, then in turn the pulse width control circuit discontinues providing drive signals to the switching circuit, causing the operation of the switching power supply circuit stopped.

3. A switching power supply circuit, provided with a protection function, comprising:
a transformer having a primary winding, a secondary winding and a tertiary winding;
a primary-side rectifying circuit for converting an alternating-current power to a direct-current power;
a primary-side electrolytic capacitor for smoothing the direct-current power from the primary-side rectifying circuit;
a secondary-side rectifying circuit for converting an alternating-current power, outputted by the secondary winding of the transformer, to a direct-current power;
a secondary-side electrolytic capacitor for smoothing the direct-current power outputted from the secondary-side rectifying circuit;
a tertiary-side rectifying and smoothing circuit for converting an alternating-current power, outputted by the tertiary winding of the transformer, to a direct-current power and smoothing thereof;
a switching circuit for repeatedly opening and closing the primary winding of the transformer that inputs a voltage of the primary-side electrolytic capacitor;
a pulse width control circuit for controlling the pulse width of drive signals that control opening and closing of the switching circuit;
a primary-side electrolytic capacitor deterioration detecting circuit for detecting deterioration of the primary-side electrolytic capacitor;
a secondary-side electrolytic capacitor deterioration detecting circuit for detecting deterioration of the secondary-side electrolytic capacitor; and
a stop-signal generation circuit for inputting deterioration detection signals from the primary-side electrolytic capacitor deterioration detecting circuit and the secondary-side electrolytic capacitor deterioration detecting circuit, wherein the protection function is provided in such a way that
the primary-side electrolytic capacitor deterioration detecting circuit inputs a voltage of the primary-side electrolytic capacitor;
the secondary-side electrolytic capacitor deterioration detecting circuit inputs an output voltage of the tertiary-side rectifying and smoothing circuit; and
the stop-signal generation circuit generates a stop-signal triggered by a deterioration detection signal either from the primary-side or secondary-side electrolytic capacitor deterioration detecting circuit, then in turn the pulse width control circuit prohibits providing drive signals to the switching circuit, causing the operation of the switching power supply circuit stopped.

4. The switching power supply circuit, provided with the protection function, according to any of claims 1 through 3, wherein the protection function is provided in such a way that
an output terminal of the stop-signal generation circuit is connected to a control input terminal of the switching circuit; and
the stop-signal generation circuit generates a stop-signal, then in turn the pulse width control circuit prohibits providing drive signals to the switching circuit, causing the operation of the switching power supply circuit stopped.

5. The switching power supply circuit, provided with the protection function, according to any of claims 1 through 3, wherein the protection function is provided in such a way that
an output terminal of the stop-signal generation circuit is connected to a power supply terminal of the pulse width control circuit; and
the stop-signal generation circuit generates a stop-signal, then in turn a power supply to the pulse width control circuit is stopped, causing the operation of the switching power supply circuit stopped.

6. The switching power supply circuit, provided with the protection function, according to any of claims 1 through 3, wherein the protection function is provided in such a way that
an output terminal of the stop-signal generation circuit is connected to the control terminal of the pulse width control circuit; and
an output signal from the stop-signal generation circuit becomes almost at the same potential as a primary-side ground, then in turn the pulse width control circuit stops oscillating and providing drive signals to the switching circuit, causing the operation of the switching power supply circuit stopped.

7. The switching power supply circuit, provided with the protection function, according to claim 3, wherein the primary-side electrolytic capacitor deterioration detecting circuit or the secondary-side electrolytic capacitor deterioration detecting circuit comprises a Zener diode.

8. The switching power supply circuit, provided with the protection function, according to claim 7, wherein the primary-side electrolytic capacitor deterioration detecting circuit further comprises a capacitor, a resistance and a diode.

9. The switching power supply circuit, provided with the protection function, according to claim 3, 7 or 8, wherein the stop-signal generation circuit comprises a thyristor.

10. The switching power supply circuit, provided with the protection function, according to claim 1, further comprising a misdetection prevention circuit between the primary-side rectifying circuit and the primary-side electrolytic capacitor, whereby preventing misdetection of deterioration of the primary-side electrolytic capacitor by the primary-side electrolytic capacitor deterioration detecting circuit during a power activation.

11. The switching power supply circuit, provided with the protection function, according to claim 3, further comprising a misdetection prevention circuit between the primary-side rectifying circuit and the primary-side electrolytic capacitor, whereby preventing misdetection of deterioration of the primary-side electrolytic capacitor by the primary-side electrolytic capacitor deterioration detecting circuit during a power activation.

12. The switching power supply circuit, provided with the protection function, according to claim 10 or 11, wherein the misdetection prevention circuit comprising:
a first resistance connected between a first direct-current output terminal of the primary-side rectifying circuit, and a primary-side direct-current terminal of the primary-side electrolytic capacitor;
a second resistance having one terminal connected to the first direct-current output terminal;
a third resistance connected to another terminal of the second resistance and a primary-side ground of the primary-side electrolytic capacitor;
a capacitor connected to the other terminal of the second resistance and the primary-side ground of the primary-side electrolytic capacitor; and
a thyristor having an anode connected to the first direct-current output terminal, a cathode connected to the primary-side direct-current terminal and a gate connected to a junction of the second resistance and the capacitor.
